# EUROPÄISCHE PATENTSCHRIFT

(11) **EP 2 918 813 B1**
(45) Veröffentlichungstag und Bekanntmachung des Hinweises auf die Patenterteilung: **13.09.2017**
(21) Anmeldenummer: 15153156.3
(22) Anmeldetag: 30.01.2015
(51) Int. Cl.: F02M 25/028, F02M 25/022

(54) **WASSEREINSPRITZANLAGE FÜR EINEN VERBRENNUNGSMOTOR**
WATER INJECTION ASSEMBLY FOR A COMBUSTION ENGINE
INSTALLATION D'INJECTION D'EAU POUR UN MOTEUR À COMBUSTION INTERNE

(30) Priorität: 12.03.2014 DE 102014204509
(43) Veröffentlichungstag der Anmeldung: 16.09.2015
(73) Patentinhaber: Bayerische Motoren Werke Aktiengesellschaft, 80809 München (DE)
(72) Erfinder: Rubbert, Stephan, Dr., 85757 Karlsfeld (DE)

(56) Entgegenhaltungen:
- EP-A1- 0 586 891
- EP-A1- 2 700 804
- EP-A2- 2 657 473
- WO-A1-83/01486
- DE-A1- 3 618 700
- DE-A1- 10 204 182
- DE-A1- 19 909 796
- DE-A1-102007 000 538
- DE-A1-102007 050 511

## Beschreibung

Die vorliegende Erfindung betrifft eine Wassereinspritzanlage für einen Verbrennungsmotor. Weiterhin betrifft die Erfindung einen Verbrennungsmotor, der mit einer derartigen Wassereinspritzanlage ausgerüstet ist. Schließlich betrifft die Erfindung ein Verfahren zum Betreiben einer Wassereinspritzanlage.

Aus dem Stand der Technik ist bekannt, dass mit einer Wassereinspritzung eine klopfende Verbrennung bei hoher Motorlast eines Verbrennungsmotors unterdrückt werden kann. Dazu wird Wasser zumeist als Benzin-Wasser-Mischung in den Brennraum eines Motors eingespritzt, oder es wird mit einem eigenen Wasserinjektor das Wasser direkt in den Brennraum eingespritzt.

Es hat sich jedoch als nachteilig erwiesen, ein Benzin-Wasser-Gemisch einzuspritzen. Dies verursacht im Instationärbetrieb durch eine unkontrollierbare Wasserrate Zündaussetzer, die speziell bei niedriger Motordrehzahl auftreten. Außerdem muss bei niedrigen Umgebungstemperaturen das Wasser weitgehend vollständig vom Benzin getrennt werden, um ein Einfrieren des Einspritzsystems zu verhindern.

Ein separater Injektor zur direkten Wassereinspritzung in den Brennraum erfordert weitere spezielle Maßnahmen, um bei hohen Lasten des Motors ohne Wassereinspritzung eine thermische Überlastung des Injektors zu verhindern. Ein weiterer Injektor im Brennraum ist außerdem schwierig unterzubringen und verursacht dadurch Einschränkungen bei der Spraygeometrie.

Eine Wassereinspritzanlage gemäß dem Oberbegriff des Anspruchs 1 ist aus der EP 0 586 891 A1 bekannt.

Es ist daher Aufgabe der Erfindung, ein Verfahren zum Betreiben eines mit einer Wassereinspritzanlage ausgerüsteten Verbrennungsmotors bereitzustellen, das bei einfacher und kostengünstiger Anwendung einen sicheren und zuverlässigen Betrieb des Verbrennungsmotors ermöglicht.

Die Aufgabe wird gelöst durch die Merkmale des Anspruchs 1. Somit wird die Aufgabe gelöst durch ein Verfahren zum Betreiben eines mit einer Wassereinspritzanlage ausgerüsteten Verbrennungsmotors. Dabei ist vorgesehen, dass durch die Wassereinspritzänlage Wasser in ein Luftansaugsystem des Verbrennungsmotors einspritzbar ist. Das erfindungsgemäße Verfahren umfasst die folgenden Schritte: Zunächst wird festgestellt, dass eine irreguläre Verbrennung innerhalb des Verbrennungsmotors vorliegt. Dies erfolgt vorteilhafterweise durch eine Klopfregelung des Verbrennungsmotors. Sollte eine klopfende Verbrennung innerhalb des Verbrennungsmotors erkannt werden, so wird durch zumindest einen Wasserinjektor der Wassereinspritzanlage Wasser in das Luftansaugsystem des Verbrennungsmotors eingespritzt. Schließlich werden die Menge des einzuspritzenden Wassers und ein Zündwinkel derart eingestellt, dass eine vorgegebene Abgastemperatur erreicht wird, bevorzugt eine zulässige Abgastemperatur nicht überschritten wird. Durch das Einspritzen des Wassers ist eine frühere Verbrennung erreichbar und gleichzeitig wird die Zylindermasse vergrößert. Beides bewirkt insbesondere eine niedrigere Abgastemperatur. Somit wird die vorgegebene Abgastemperatur insbesondere durch zulässige maximale Abgastemperatur im Katalysator oder im Turbineneintritt definiert. Um die Abgastemperatur zu senken, wird vorteilhafterweise der Zündwinkel vergrößert und/oder die eingespritzte Wassermenge vergrößert. Außerdem wird festgestellt, dass eine Umgebungstemperatur eine Minimaltemperatur unterschreitet. In diesem Fall besteht die Gefahr, dass das Wasser innerhalb der Wassereinspritzanlage einfriert, wodurch Beschädigungen an der Wassereinspritzanlage auftreten können. Daher wird der folgende Schritt ausgeführt: Die Pumprichtung der Pumpe der Wassereinspritzanlage wird umgekehrt. Gleichzeitig werden die Wasserinjektoren geöffnet. Auf diese Weise fördert die Pumpe das verbliebene Wasser innerhalb der Wassereinspritzanlage in den Wassertank. So wird ebenfalls erreicht, dass das Wassereinspritzsystem von verbliebenem Wasser befreit wird, so dass ein Einfrieren von Wasser innerhalb der Wassereinspritzanlage vermieden wird. Die zuvor genannten Schritte werden besonders bevorzugt bei einer Umgebungstemperatur von weniger als 5°C ausgeführt.

Die Wassereinspritzanlage umfasst einen Wassertank, zumindest eine Pumpe und zumindest einen Wasserinjektor. Durch die Pumpe ist Wasser aus dem Wassertank zu dem Wasserinjektor pumpbar. Der Wasserinjektor wiederum ist ausgebildet, das Wasser in ein Luftansaugsystem des Verbrennungsmotors einzuspritzen. Bevorzugt ist mit der Wassereinspritzanlage Wasser über den Wasserinjektor in ein Ansaugrohr des Verbrennungsmotors einspritzbar.

Die Unteransprüche haben vorteilhafte Weiterbildungen der Erfindung zum Inhalt.

Vorteilhafterweise ist jedem Wasserinjektor zumindest ein Einlassventil des Verbrennungsmotors zugeordnet. Dabei ist vorteilhafterweise vorgesehen, dass durch den Wasserinjektor Wasser in das Luftansaugsystem unmittelbar vor einem Einlassventil einspritzbar ist. Auf diese Weise wird das Wasser nur durch einen sehr kleinen Teilbereich des Luftansaugsystems geleitet und erreicht somit nach kurzer Aufenthaltsdauer im Luftansaugsystem einen Zylinder des Verbrennungsmotors. Besonders bevorzugt wird durch den Wasserinjektor Wasser saugsynchron eingespritzt, wobei das Wasser vorteilhafterweise bei geöffnetem Einlassventil eingespritzt wird. Durch diese Maßnahmen wird ein möglichst großer Anteil des Wassers flüssig in den Zylinder geleitet, wodurch die Verdampfung des Wassers vollständig oder nahezu vollständig innerhalb des Zylinders und damit innerhalb eines Brennraumes stattfindet. Dies geht mit einer größtmöglichen Abkühlung der Verbrennungsluft innerhalb des Zylinders einher, wodurch der Effekt der Wassereinspritzung maximiert wird.

Bevorzugt ist der Wasserinjektor ausgebildet, das Wasser derart in das Luftansaugsystem einzuspritzen, so dass das eingespritzte Wasserspray keine Wände des Luftansäugsystems berührt. Auf diese Weise wird sichergestellt, dass das eingespritzte Wasser vollständig in einen Zylinder des Verbrennungsmotors eintritt.

In einer vorteilhaften Ausführungsform der Erfindung ist die Pumpe derart ausgebildet, dass diese alternativ Luft ansaugt anstatt Wasser aus dem Wassertank anzusaugen. Das Ansaugen von Luft geschieht bevorzugt über einen Bypass. Besonders bevorzugt ist der Bypass schaltbar, so dass mit der Pumpe wechselweise Wasser oder Luft ansaugbar und zu dem Wasserinjektor pumpbar ist. Durch das Öffnen eines Bypasses und durch das resultierende Ansaugen von Luft ist das Wassereinspritzsystem entleerbar, wobei das Wasser vollständig mit Luft ersetzt wird. Dies ermöglicht insbesondere ein Leeren der Wassereinspritzanlage bei geringen Außentemperaturen, bevorzugt um ein Einfrieren des Wassers innerhalb der Wassereinspritzanlage zu vermeiden.

Vorteilhafterweise weist der Wassertank eine Heizung auf. Die Heizung ist insbesondere dadurch realisiert, dass ein Kühlwasser des Verbrennungsmotors Wärme an den Wassertank abgibt. Somit ist der Wassertank beheizbar, wodurch ein Betrieb der Wassereinspritzanlage auch bei geringen Umgebungstemperaturen ermöglicht ist. Für einen Betrieb bei geringen Außentemperaturen ist außerdem bevorzugt vorgesehen, dass der Wassertank aus einem flexiblen Material, insbesondere aus einem flexiblen Kunststoff geformt ist, so dass eine mit einem Einfrieren des Wassers einhergehende Volumenveränderung durch ein Ausdehnen des Wassertanks aufnehmbar ist.

Bevorzugt ist der Wassertank der Wassereinspritzanlage mit einer Klimaanlage und/oder einer Abgasanlage des Verbrennungsmotors und/oder mit einer Regenwasserauffanganlage verbunde Auf diese Weise ist Kondensat aus der Klimaanlage und/oder Abgaskondensat und/oder Regenwasser in den Wassertank überführbar. Somit wird der Wassertank vorteilhafterweise während des Betriebs des Verbrennungsmotors gefüllt, so dass ein Nachfüllen des Wassertanks nur in sehr großen Intervallen oder bevorzugt gar nicht nötig ist.

Der Verbrennungsmotor ist vorteilhafterweise ausgebildet, dass jeder Zylinder des Verbrennungsmotors zumindest ein Einlassventil aufweist. Dabei ist bevorzugt vorgesehen, dass das Luftansaugsystem des Verbrennungsmotors zumindest ein Ansaugrohr für jedes Einlassventil aufweist. Weiterhin ist bevorzugt in jedem Ansaugrohr ein Wasserinjektor angeordnet. Besonders bevorzugt weist jeder Zylinder zwei Einlassventile auf, so dass jedem Zylinder zwei Ansaugrohre und somit auch zwei Wasserinjektoren zugeordnet sind.

Bei dem erfindungsgemäßen Verfahren ist vorteilhafterweise vorgesehen, dass eine Menge des Wassers, das durch die Wassereinspritzanlage eingespritzt wird, mit zunehmender Klopfhäufigkeit des Verbrennungsmotors erhöht wird. Auf diese Weise wird der Klopfneigung der Verbrennung entgegengewirkt.

Vorteilhafterweise findet ein Einspritzen von Wasser auch dann statt, wenn eine Temperatur des Verbrennungsmotors eine Betriebstemperatur des Verbrennungsmotors unterschreitet. Durch das Einspritzen von Wasser im Motorwarmlauf wird vorteilhafterweise ein Katalysator des Verbrennungsmotors schneller aufgeheizt, als dies ohne Wassereinspritzung der Fall wäre. Im Motorwarmlauf wird durch die niedrige Temperatur der Brennraumoberflächen eine hohe Partikelemission verursacht. Durch die Wassereinspritzung wird in diesem Betriebszustand die Partikelemission vermindert.

Weiterhin ist bevorzugt vorgesehen, dass die folgenden Schritte ausgeführt werden: Zunächst wird festgestellt, dass eine zur Verfügung stehende Menge an Wasser einen vordefinierten Schwellwert unterschritten hat. Somit befindet sich nur noch eine geringe Menge an Wasser in dem Wassertank, wodurch ein Wassersparbetrieb gestartet wird. Somit wird bevorzugt eine Wassereinspritzung lediglich bei hohen Drehzahlen und/oder Lasten ausgeführt. Daher wird bevorzugt das Einspritzen von Wasser vermieden, wenn eine Drehzahl des Verbrennungsmotors eine vordefinierte Grenzdrehzahl unterschreitet. Durch das Beibehalten der Wassereinspritzung bei Überschreiten der Grenzdrehzahl wird eine Gemischanreicherung vermieden und der Arbeitsbereich des Katalysators eingehalten.

Vorteilhafterweise, ist außerdem vorgesehen, dass ein Betrieb der Wassereinspritzanlage bei Unterschreiten der Minimaltemperatur bei gleichzeitigem Betrieb des Verbrennungsmotors möglich ist. Hierzu wird vorteilhafterweise mittels einer Lambda-Regelung festgestellt, wann die zuvor mit Luft gefüllte Wassereinspritzanlage wieder vollständig mit Wasser gefüllt ist. Da durch das Einspritzen von Luft eine Gemischanreicherung erfolgt, während nach Beginn der Wassereinspritzung eine Abmagerung ersichtlich ist, ist über die Lambda-Regelung ein Maß vorhanden, mit dem bewertbar ist, ob noch Luft innerhalb der Wassereinspritzanlage vorhanden ist. Sobald detektiert wird, dass sämtliche Luft aus der Wassereinspritzanlage entfernt wurde, ist die Wassereinspritzanlage wieder betriebsbereit.

Die Erfindung wird nun anhand von Ausführungsbeispielen unter Bezugnahme auf die beigefügten Zeichnungen detailliert beschrieben. In den Zeichnungen ist:
Figur 1 eine schematische Darstellung eines Verbrennungsmotors zusammen mit
   einer Wassereinspritzanlage,
Figur 2 ein Ausschnitt aus dem Verbrennungsmotor und der Wassereinspritzanlage,
Figur 3 eine weitere Ansicht des Ausschnitts aus dem Verbrennungsmotor und der Wassereinspritzanlage, und
Figur 4 eine schematische Darstellung über Einspritzzeitpunkte der Wassereinspritzanlage.

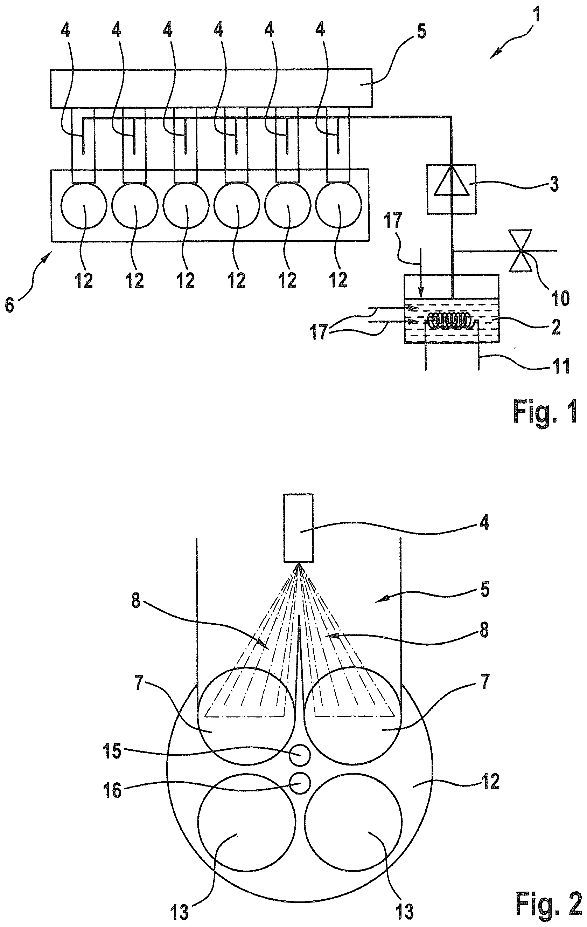

Figur 1 zeigt eine Wassereinspritzanlage 1, die in einem Verbrennungsmotor 6 eingebaut ist. Der Verbrennungsmotor 6 mit der Wassereinspritzanlage 1 wird durch ein Verfahren gemäß einem Ausführungsbeispiel der Erfindung betrieben. Der Verbrennungsmotor 6 weist sechs Zylinder 12 auf, wobei jedem Zylinder 12 ein Ansaugrohr eines Luftansaugsystems 5 zugeordnet ist.

Die Wassereinspritzanlage 1 umfasst einen Wassertank 2, der mit einer Pumpe 3 wirkverbunden ist. Somit ist durch die Pumpe 3 Wasser aus dem Wassertank 2 zu Injektoren 4 pumpbar, wobei jeder Injektor 4 in einem Ansaugrohr des Luftansaugsystems 5 angeordnet ist. Durch die Wassereinspritzanlage 1 ist Wasser in jeden einzelnen Zylinder 12 einspritzbar.

Um die Wassereinspritzanlage 1 zu entleeren, das heißt, um die Wassereinspritzanlage 1 vollständig mit Luft zu füllen, ist ein Bypass 10 vorhanden. Der Bypass 10 ist vorteilhafterweise über ein Ventil verschließbar und öffenbar. Dabei ist der Bypass 10 auf einer Ansaugseite der Pumpe 3 angeordnet, so dass die Pumpe 3 bei geöffnetem Bypass 10 anstatt Wasser aus dem Wassertank 2 Luft über den Bypass 10 ansaugt.

Um ein Einfrieren des Wassers im Wassertank 2 zu verhindern, ist eine Heizung 11 vorgesehen. Die Heizung 11 ist vorteilhafterweise durch ein Kühlsystem des Verbrennungsmotors 6 realisiert, so dass Kühlwasser zur Kühlung des Verbrennungsmotors 6 Wärme an den Wassertank 2 abgibt. Schließlich ist an dem Wassertank 2 eine Sensorik 17 vorhanden, um Parameter über den Wassertank zu erfassen. Derartige Parameter sind insbesondere ein aktueller Füllstand und/oder eine Wassertemperatur. Außerdem umfasst die Sensorik 17 vorteilhafterweise Mittel zum Erkennen und Vermeiden von Falschbetankungen, wie insbesondere Leitfähigkeitsmesser. Der Wassertank 2 ist außerdem vorteilhafterweise aus einem flexiblen Kunststoff gefertigt, so dass der Wassertank 2 eine Volumenänderung bei Einfrieren des Wassers aufnimmt. Somit ermöglicht der Wassertank 2 ein Speichern von Wasser auch bei geringen Umgebungstemperaturen, insbesondere bei Temperaturen unterhalb des Gefrierpunkts von Wasser.

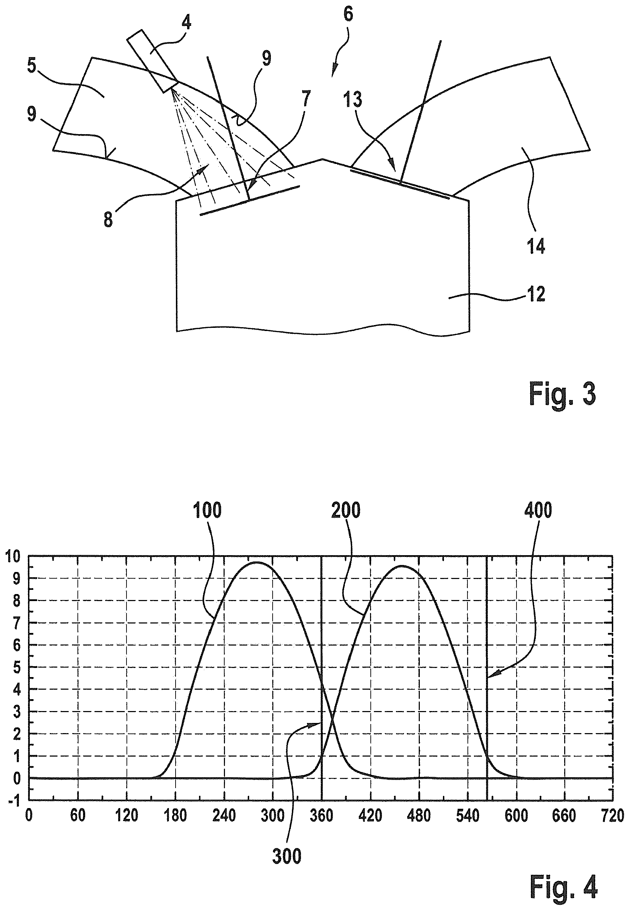

Figur 2 zeigt einen Ausschnitt aus Figur 1, wobei das Einspritzen von Wasser in das Ansaugsystem eines Zylinders 12 gezeigt ist. Der Zylinder 12 umfasst zwei Einlassventile 7 und zwei Auslassventile 13. Weiterhin umfasst der Zylinder 12 einen Benzininjektor 15 sowie eine Zündkerze 16. Ein Wasserinjektor 4 der Wassereinspritzanlage 1 aus Figur 1 ist derart in dem Ansaugsystem 5 des Zylinders 12 angeordnet, das mittels des Injektors 4 jeweils ein Wasserspray 8 unabhängig voneinander auf die Einlassventile 7 gerichtet ist. Eine Seitenansicht aus Figur 2 ist in Figur 3 gezeigt.

Der Wasserinjektor 4 ist vorteilhafterweise derart in dem Luftansaugsystem 5 angeordnet und/oder derart eingestellt, dass das Wasserspray 8 des Wasserinjektors 4 die Innenwände 9 des Luftansaugsystems 5 nicht berührt. Somit gelangt das Wasserspray vollständig in einen Brennraum des Zylinders 12, so dass innerhalb des Brennraums des Zylinders 12 eine größtmögliche Abkühlung erfolgt. Dies ermöglicht eine frühere Verbrennung des Kraftstoffs innerhalb der Brennraums, wodurch Abgase mit niedrigerer Abgastemperatur durch das Auslassventil 13 in eine Abgasanlage 14 des Verbrennungsmotors 6 gelangen.

Figur 4 zeigt beispielhaft eine Einspritzperiode, während der das Wasserspray 8 in das Luftansaugsystem 5 eingespritzt wird. In dem in Figur 4 gezeigten Diagramm zeigt die Abszissenachse einen Kurbelwinkel in Grad, während die Ordinatenachse einen Ventilhub in Millimetern anzeigt. Eine Auslasskurve 100 zeigt den Öffnungsgrad der Auslassventile 13 eines Zylinders 12 des Verbrennungsmotors 6, während eine Einlasskurve 200 den Öffnungsgrad der Einlassventile 7 des Zylinders 12 anzeigt. Wie aus Figur 4 ersichtlich ist, wird eine Wassereinspritzung saugsynchron durchgeführt, so dass ein Startzeitpunkt 300 der Wassereinspritzung in einem Bereich liegt, in dem auch die Einlassventile 7 geöffnet werden. Ebenso liegt ein Endzeitpunkt 400 der Wassereinspritzung im Bereich einer minimalen Öffnung der Einlassventile 7. Durch die saugsynchrone Wassereinspritzung ist sichergestellt, dass ein maximaler Anteil des eingespritzten Wassers in den Brennraum des Zylinders 12 gelangt.

Für ein besonders bevorzugtes Wasserspray 8 ist der Wasserinjektor 4 unmittelbar vor dem Einlassventil 7 angeordnet. In diesem Fall führt der kleine statische Durchsatz des Wasserinjektors 4 zu einem sehr kleinen Tropfendurchmesser. Dieser Effekt wird bevorzugt durch Drallinjektoren verstärkt. Bei hinreichend kleinen Tropfendurchmessern und hoher Luftströmungsgeschwindigkeit innerhalb des Luftansaugsystems 6 werden die Wassertropfen von der Strömung mitgerissen und ein Kontakt mit den Innenwänden 9 des Luftansaugsystems 5 wird vermieden. Durch einen höheren Systemdruck können ebenfalls kleine Tropfendurchmesser erreicht werden.

Nachfolgend werden vier Betriebsstrategien beschrieben, wie die Wassereinspritzanlage 1 betrieben werden kann:
Im normalen Betrieb des Verbrennungsmotors 6 wird die Wassereinspritzanlage 1 eingesetzt, sobald eine Klopfregelung des Verbrennungsmotors 6 irreguläre Verbrennungen erkennt. Mit zunehmender Klopfhäufigkeit wird die eingespritzte Wassermasse erhöht, um der Klopfneigung entgegenzuwirken. Eine Zündwinkelregelung des Verbrennungsmotors 6 dient dabei lediglich zur schnellen Reaktion. Bei hohen Motordrehzahlen oder einer hohen Motorlast des Verbrennungsmotors 6 muss die eingespritzte Wassermasse so weit vergrößert werden, dass die zulässige Abgastemperatur in der Abgasanlage 14 des Verbrennungsmotors 6 im Turbineneintritt und im Katalysator eingehalten wird. Dazu ist ein hinreichend großer Zündwinkel erforderlich. Die erforderliche Wassermasse, die durch die Wassereinspritzanlage 1 einzuspritzen ist, ist vorteilhafterweise in einem mehrdimensionalen Kennfeld abgelegt. In diesem sind neben den Motorbetriebsbedingungen, wie insbesondere Drehzahl und/oder Luftdurchsatz und/oder Kraftstoffqualität und/oder Kühlwassertemperatur auch Umgebungsbedingungen, wie insbesondere Ansauglufttemperatur und/oder Ansaugluftdichte und/oder Ansaugluftfeuchte und/oder Abgastemperatur vorhanden, um aus allen diesen Parametern die erforderliche Wassermasse zu bestimmen.

Der Wassertank 2 wird im Betrieb des Verbrennungsmotors 6 insbesondere durch Kondensat aus einer Klimaanlage und/oder durch Regenwasser und/oder durch ein Abgaskondensat aufgefüllt. Bei einer negativen Wasserbilanz und/oder bei niedrigem Füllstand innerhalb des Wassertanks 2 wird ein Wassersparmodus aktiviert. Bei diesem wird Wasser nur noch bei hohen Drehzahlen oder Lasten des Verbrennungsmotors 6 eingespritzt. Dadurch wird eine Gemischanreicherung vermieden und der Arbeitsbereich eines eventuell vorhandenen Katalysators eingehalten.

Sollte der Fall vorliegen, dass der Verbrennungsmotor 6 kalt gestartet wurde, so dass eine Betriebstemperatur des Verbrennungsmotors noch nicht erreicht wurde, so wird ebenfalls durch die Wassereinspritzanlage 1 Wasser eingespritzt. Auf diese Weise werden das Aufheizen des Katalysators beschleunigt und hohe Partikelemissionen im Kaltbetrieb vermieden.

Sollten die Umgebungsbedingungen derart kritisch sein, dass ein Einfrieren von Wasser innerhalb der Wassereinspritzanlage 1 nicht auszuschließen ist, so muss die Wassereinspritzanlage 1 entleert werden. Derartige Bedingungen liegen insbesondere dann vor, wenn eine Umgebungstemperatur unter 5°C sinkt. In diesem Fall wird vor dem Abstellen des Verbrennungsmotors 6 der Bypass 10 in der Ansaugleitung der Pumpe 3 geöffnet, wobei die Pumpe 3 anschließend durch den Bypass 10 Umgebungsluft ansaugt. Gleichzeitig werden sämtliche Wasserinjektoren 4 geöffnet, wodurch das restliche Wasser in die Zylinder 12 des Verbrennungsmotors 6 eingespritzt wird. Nach kurzer Zeit ist somit die Einspritzanlage 1 vollständig mit Luft gefüllt, so dass die Gefahr des Einfrierens nicht mehr vorliegt. Da der Wassertank 2 bevorzugt aus dehnbarem Kunststoff gefertigt ist, nimmt der Wassertank 2 eine Volumenänderung beim Einfrieren des darin enthaltenen Wassers ohne Beschädigungen auf.

Alternativ zu der zuvor genannten Strategie ist erfindungsgemäß ebenso vorgesehen, dass die Pumpe 3 mit einer Drehrichtungsumkehr das noch vorhandene Wasser in der Wassereinspritzanlage 1 absaugt. Dazu werden ebenfalls die Wasserinjektoren 4 geöffnet, so dass die Pumpe durch die Wasserinjektoren 4 Luft ansaugt. Dadurch wird innerhalb einer kurzen Zeitspanne die Wassereispritzanlage 1 vollständig mit Luft gefüllt, so dass eine Gefahr eines Einfrierens nicht mehr vorliegt.

Nach einem erneuten Kaltstart des Verbrennungsmotors 6 bei entleerter Wassereinspritzanlage 1 wird der Wassertank 2 zunächst durch die Heizung 11 beheizt. Sollte sich gefrorenes Wasser innerhalb des Wassertanks 2 befinden, so wird dieses durch die Heizung 11 aufgetaut. Über die Sensorik 17 ist feststellbar, wann das Wasser innerhalb des Wassertanks 2 aufgetaut ist, besonders bevorzugt vollständig aufgetaut ist. Anschließend wird die Wassereinspritzanlage 1 entlüftet, indem sämtliche Wasserinjektoren 4 kurzzeitig geöffnet werden. Durch eine Reaktion einer Lambda-Regelung ist erkennbar, wann mit den Wasserinjektoren 4 Wasser eingespritzt wird. Anhand der Lambda-Regelung ist nämlich erkennbar, dass eine Anreicherung stattfindet, solange die Wasserinjektoren 4 die in der Wassereinspritzanlage 1 vorhandene Luft fördern, während nach Beginn der Wassereinspritzung durch die Wasserinjektoren 4 eine Abmagerung erkennbar ist. Nach der Entlüftung der Wassereinspritzanlage 1 ist diese wieder betriebsbereit und kann vorteilhafterweise mit den zuvor genannten Betriebsstrategien betrieben werden.

### Bezugszeichenliste:

- 1: Wassereinspritzanlage
- 2: Wassertank
- 3: Pumpe
- 4: Wasserinjektor
- 5: Luftansaugsystem
- 6: Verbrennungsmotor
- 7: Einlassventil
- 8: Wasserspray
- 9: Innenwand des Luftansaugsystems
- 10: Bypass
- 11: Heizung
- 12: Zylinder
- 13: Auslassventil
- 14: Abgasanlage
- 15: Benzininjektor
- 16: Zündkerze
- 17: Sensorik
- 100: Auslasskurve
- 200: Einlasskurve
- 300: Startzeitpunkt der Wassereinspritzung
- 400: Endzeitpunkt der Wassereinspritzung

## Patentansprüche

1. Verfahren zum Betreiben eines mit einer Wassereinspritzanlage (1) ausgerüsteten Verbrennungsmotors (6), wobei durch die Wassereinspritzanlage (1) Wasser in ein Luftansaugsystem (5) des Verbrennungsmotors (6) einspritzbar ist, umfassend die Schritte:
- Feststellen, dass eine irreguläre Verbrennung vorliegt,
- Einspritzen von Wasser durch zumindest einen Wasserinjektor (4) der Wassereinspritzanlage (1), und
- Einstellen der Menge des einzuspritzenden Wassers und eines Zündwinkels, so dass eine vorgegebene Abgastemperatur erreicht wird,
**gekennzeichnet durch** die Schritte:
- Feststellen, dass eine Umgebungstemperatur eine Minimaltemperatur unterschreitet,
- Füllen der Wassereinspritzanlage (1) mit Luft durch ein Umkehren einer Pumprichtung einer Pumpe (3) der Wassereinspritzanlage (1), Öffnen des Wasserinjektors (4) und Fördern des in der Wassereinspritzanlage (1) verbliebenen Wassers in einen Wassertank (2) durch die Pumpe (3).

2. Verfahren nach Anspruch 1, **dadurch gekennzeichnet, dass** eine Menge des Wassers, das durch die Wassereinspritzanlage (1) eingespritzt wird, mit zunehmender Klopfhäufigkeit des Verbrennungsmotors erhöht wird.

3. Verfahren nach einem der Ansprüche 1 oder 2, **dadurch gekennzeichnet, dass** ein Einspritzen von Wasser auch dann stattfindet, wenn eine Temperatur des Verbrennungsmotor (6) eine Betriebstemperatur des Verbrennungsmotors (6) unterschreitet.

4. Verfahren nach einem der Ansprüche 1 bis 3, **gekennzeichnet durch** die zusätzlichen Schritte:
- Feststellen, dass eine zu Verfügung stehenden Menge an Wasser einen vordefinierten Schwellwert unterschritten hat, und
- Vermeiden des Einspritzens, wenn eine Drehzahl des Verbrennungsmotors eine vordefinierte Grenzdrehzahl unterschreitet.

## Claims

1. A method for operating an internal combustion engine (6) equipped with a water injection system (1), wherein water can be injected into an air intake system (5) of the internal combustion engine (6) by the water injection system (1), comprising the steps:
- establishing that irregular combustion is present,
- injecting water through at least one water injector (4) of the water injection system (1), and
- setting the amount of water to be injected and an ignition angle, so that a specified exhaust temperature is achieved,
**characterised by** the steps:
- establishing that an ambient temperature is below a minimum temperature,
- filling the water injection system (1) with air by reversing a pumping direction of a pump (3) of the water injection system (1), opening the water injector (4) and conveying the water remaining in the water injection system (1) into a water tank (2) by the pump (3).

2. A method according to Claim 1, **characterised in that** an amount of the water which is injected by the water injection system (1) is increased with increasing knocking frequency of the internal combustion engine.

3. A method according to one of Claims 1 or 2, **characterised in that** injection of water takes place also when a temperature of the internal combustion engine (6) is below an operating temperature of the internal combustion engine (6).

4. A method according to one of Claims 1 to 3, **characterised by** the additional steps:
- establishing that an available amount of water has dropped below a predefined threshold value, and
avoiding injection if a speed of the internal combustion engine is below a predefined limit speed.

## Revendications

1. Procédé de gestion d'un moteur à combustion interne (6) équipé d'une installation d'injection d'eau (1), cette installation (1) permettant d'injecter de l'eau dans le système d'aspiration d'air (5) du moteur à combustion interne (6),
**caractérisé en ce qu'**
il comprend des étapes consistant à :
- déterminer la présence d'une combustion irrégulière,
- injecter de l'eau par au moins un injecteur d'eau (4) de l'installation d'injection d'eau (1), et
- régler la quantité d'eau à injecter et l'angle d'allumage de façon à atteindre une température prédéfinie des gaz d'échappement,
**caractérisé en ce qu'**
il comprend des étapes consistant à :
- déterminer que la température ambiante passe au-dessous d'une température minimum,
- remplir d'air l'installation d'injection d'eau (1), par inversion de la direction de pompage d'une pompe (3) de l'installation d'injection d'eau (1), ouvrir l'injecteur d'eau (4) et refouler l'eau restant dans l'installation d'injection d'eau (1) dans un réservoir d'eau (2) au moyen de la pompe (3).

2. Procédé conforme à la revendication 1,
**caractérisé en ce que**
la quantité d'eau injectée par l'installation d'injection d'eau (1) est augmentée lorsque la fréquence de cliquetis du moteur à combustion interne augmente.

3. Procédé conforme à l'une des revendications 1 et 2,
**caractérisé en ce que**
l'on effectue également une injection d'eau lorsque la température du moteur à combustion interne (6) passe au-dessous de la température de fonctionnement de ce moteur.

4. Procédé conforme à l'une des revendications 1 à 3,
**caractérisé en ce qu'**
il comprend en outre les étapes suivantes consistant à :
- déterminer que la quantité d'eau dont on dispose est passée au-dessous d'une valeur de seuil prédéfinie, et
- éviter l'injection lorsque la vitesse de rotation du moteur à combustion interne passe au-dessous d'une vitesse limite prédéfinie.
